# EUROPEAN PATENT SPECIFICATION

(11) **EP 3 699 065 B1**
(45) Date of publication and mention of the grant of the patent: **16.08.2023**
(21) Application number: 18868307.2
(22) Date of filing: 11.10.2018
(51) Int. Cl.: B62D 37/02, B60G 17/019, B62D 35/00, B60G 17/00, B62D 35/02

(54) **POWER VEHICLE**
KRAFTFAHRZEUG
VÉHICULE À MOTEUR

(30) Priority: 17.10.2017 CN 201710965905
(43) Date of publication of application: 26.08.2020
(73) Proprietor: NIO (Anhui) Holding Co., Ltd., Hefei City, Anhui Province (CN)
(72) Inventor: ZHU, Bo, Anting, Jiading, Shanghai (CN)
(74) Representative: Vossius & Partner Patentanwälte Rechtsanwälte mbB
(86) International application number: PCT/CN2018/109751
(87) International publication number: WO 2019/076225

(56) References cited:
- WO-A1-2012/161607
- WO-A2-2010/113049
- CN-A- 106 809 289
- CN-U- 205 346 717
- CN-U- 205 417 821
- CN-U- 206 446 681
- DE-A1- 4 230 559
- DE-A1- 10 158 773
- DE-A1-102005 033 815
- DE-A1-102016 103 398
- DE-U1-202006 009 428
- DE-U1-202016 103 282
- US-A1- 2017 057 565
- US-A1- 2017 158 262

## Description

### Technical Field

The present invention relates to powered vehicles, and more particularly to powered vehicles having improved aerodynamic performance. In some more specific circumstances, the present invention relates to racing cars with improved aerodynamic performance.

### Background Art

During 1999, in racing events around the world, accidents due to the backflip types of the vehicle body occurred quite frequently. And since recent years, such accidents due to the backflip of the vehicle body have happened again frequently. Such accidents typically occurs in a racing car having a high momentum, when an accident occurs, due to the irregular extreme conditions present on the road and the high inertia of the vehicle itself, the head of the racing car goes upward, and then the racing car is ejected into the air, which in turn causes the backflip, which results in a very severe safety hazard.
WO2012161607A1 relates to the fields of engineering in which a wing or rear wing is used to produce an aerodynamic force, namely lift or downforce, in particular under turbulent flow conditions, when a sudden change in the speed, density and direction of flow of an air mass arises. The invention can also be used in the design of a rear wing of a formula 1 racing car or the rear wing of any wheeled vehicle or speed boat when downforce is required. The problem of the invention consists in developing a method that makes it possible to produce, for a high-speed vehicle, different aerodynamic devices with improved characteristics, in particular with a streamlining performance whereby a balance is provided between the necessary level of downforce and speed under turbulent flow conditions with improved controllability. For this purpose, part of the rear wing is detached and mounted on the racing car, another part of the rear wing is detached and also mounted on the racing car at an angle of attack that is greater than the angle of attack of the first part, and the two parts are combined to form one unit. As the racing car moves, the unit is tilted towards an increased angle of attack until separation of the flow from the second part takes place. Furthermore, the rear wing is set to a unit tracking mode with the angle of attack of the first part on high-speed sections of track and with the angle of attack of the second part on sections of track over which the racing car travels at a reduced speed.
DE102005033815A1 relates to a racing car with free-standing wheels, in particular a Formula 1 racing car.
US2017158262A1 relates to a vehicle which includes a body, an aerodynamic element, a movement mechanism, a plurality of sensors, and a controller. The body is located along a longitudinal axis and a lateral axis. The aerodynamic element intersects ambient airflow, which generates an aerodynamic force. The movement mechanism moves the aerodynamic element, relative to the body, along the longitudinal and lateral axes. The sensors collectively generate input signals corresponding to an operating condition of the vehicle. The controller determines a current position of the movement mechanism, corresponding to a current location of the aerodynamic element on the axes and determines a desired position of the movement mechanism, corresponding to a desired location of the aerodynamic element on the axes. The controller transmits a movement signal to the movement mechanism to change position from the current position to the desired position, such that the aerodynamic element moves from the current location to the desired location.
WO2012161607A1 and DE102005033815A1, respectively, describe a powered vehicle, characterized in that it comprises: a vehicle body including a head portion, a cockpit portion, and a rear portion; a front wing element disposed laterally along the vehicle body at the head portion, the front wing element having an upper cambered surface bending upward and a lower cambered surface bending upward; and an aerodynamic device disposed longitudinally along the vehicle body at the bottom portion of the vehicle and is configured to expand air flowing therethrough and produce negative pressure; wherein, upon movement of the powered vehicle, a bottom fluid pressure flowing from the lower cambered surface of the front wing element through the bottom portion of the vehicle body via the aerodynamic device is lower than a roof fluid pressure flowing through an upper portion of the vehicle body via the upper cambered surface of the front wing element.
US2017158262A1 describes a powered vehicle, characterized in that it comprises: a vehicle body including a head portion, a cockpit portion, and a rear portion; a front wing element disposed laterally along the vehicle body at the head portion, the front wing element having an upper cambered surface bending upward and a lower cambered surface bending upward.
WO 2010/113049 A2 discloses a powered vehicle comprising a vehicle body which includes a head portion, a cockpit portion, and a rear portion. A front wing element is disposed laterally along the vehicle body at the head portion; and an aerodynamic device is disposed longitudinally along the vehicle body at the bottom portion of the vehicle and is configured to expand air flowing therethrough and produce negative pressure.

These incidents are mostly caused by the lack of consideration of certain extreme driving environments. While the strategy design of combining the aerodynamic performance of the vehicle body and the weight distribution of the vehicle body may theoretically solve the problem of a vehicle head going upward, and in turn the racing car is made more stable in an extreme environment. Therefore, how to provide vehicles with improved aerodynamic performance becomes a technical problem demanding prompt solutions.

### Summary of the invention

It is an object of the present invention to provide a powered vehicle having improved aerodynamic performance, in a specific non-limiting example, there is provided a racing car having improved aerodynamic performance.

The present invention is defined by the features of claim 1. Preferred embodiments are defined by the features of the dependent claims, respectively. To realize the object of the present invention, in accordance with one aspect of the present invention, there is provided a powered vehicle, comprising: a vehicle body including a head portion, a cockpit portion, and a rear portion; a front wing element disposed longitudinally at the head portion, the front wing element having an upper cambered surface bending upward and a lower cambered surface bending upward; and an aerodynamic device disposed longitudinally at the bottom portion of the vehicle and is configured to expand air flowing therethrough and produce negative pressure; wherein, upon movement of the powered vehicle, a bottom fluid pressure flowing from the lower cambered surface of the front wing element through the bottom portion of the vehicle body via the aerodynamic device is lower than a roof fluid pressure flowing through an upper portion of the vehicle body via the upper cambered surface of the front wing element, wherein the aerodynamic device extends longitudinally past the bottom portion of the vehicle body within a range of 40%-60% of the wheelspan, wherein the wheelspan refers tc the distance between the front wheel shaft and the rear wheel shaft, wherein the aerodynamic device begins to extend backwardly from the bottom portion of the vehicle body corresponding to a firewall of the powered vehicle. According to the powered vehicle of the present invention, negative pressure is produced at the bottom of the vehicle body through the cooperation of the front wing element and the aerodynamic device, and the pressure centers of these downward pressure maintain a steady fore-and-aft distribution ratio over a certain range of trimming angles, so that convective air may push the powered vehicle to stay in contact with the ground, effectively avoiding the occurrence of the situation where the vehicle head goes off the ground or even makes a backflip over a wide range of trimming angles. There is provided a vehicle body bottom setting matched with an aerodynamic device, wherein geometric gradient and length formed by this portion of the bottom portion of the vehicle body can better achieve the effect of the expansion depressurization when the air flows through this section, and finally create a negative pressure to produce the downward pressure. A specific implementation of an aerodynamic device is provided herein that takes into consideration the compatibility between other existing elements of the powered vehicle and the aerodynamic device setting.

Optionally, the aerodynamic device extends longitudinally through a portion of the head portion, all of the cockpit portion, and a portion of the rear portion. A specific implementation of the aerodynamic device is provided herein, such arrangement well utilizes the space of the vehicle bottom portion to arrange the aerodynamic device, thereby ensuring that the effect of the expansion depressurization is achieved when air flows therethrough and eventually creating a negative pressure to produce the downward pressure.

Optionally, the aerodynamic device has a geometric gradient of 1°-5°. There is provided a vehicle body bottom setting matched with an aerodynamic device, wherein geometric gradient and length formed by this portion of the bottom portion of the vehicle body can better achieve the effect of the expansion depressurization when the air flows through this section, and finally create a negative pressure to produce the downward pressure.

Optionally, the aerodynamic device extends longitudinally past the bottom portion of the vehicle body within a range of 55% of the wheelspan, and/or has a geometric gradient of 3.5°. Such arrangement proposes further optimization on the basis of the aforementioned solution, and the experiment demonstrates that the bottom portion of the vehicle body with such parameter design further facilitates the production of the negative pressure and the effect of the downward pressure.

According to a not claimed example, when the angle of attack does not exceed 6°, the resultant force of the roof fluid pressure and the bottom fluid pressure experienced by the powered vehicle in the motion state is a downward pressure. There is provided an extremely severe condition which can be resisted by the racing car having the front wing element and the aerodynamic device of the present concept herein, i.e., when the angle of attach reaches 6°, the convective air would still produce enough downward pressure for the front shaft of the power vehicle, preventing it from going off the ground.

Optionally, the front wing element includes a front section and a rear section closely connected, the rear section being fixed on the head portion, and the front section being capable of adjusting a tilt angle relative to the rear section. There is provided a specific implementation of the front wing element, in such arrangement, the front wing element has certain adjustment space, and by rotating the front section of the front wing element, the amount of air flow through the upper side and the lower side of the front wing element may be changed, thereby adjusting the downward pressure produced.

Optionally, further comprising: a speed-sensitive suspension system adjusting a vertical height between the wheel shaft and the vehicle body based on the real-time wheel speed in the movement of the powered vehicle, and changes the vertical height between the bottom portion of the vehicle body and the ground. There is provided an auxiliary improvement that improves the phenomenon the powered vehicle going off the ground, the vertical height between the bottom portion of the vehicle body and the ground is adjusted by the speed-sensitive suspension system so that the powered vehicle is closer to the ground, i.e., the amount of air flow through the aerodynamic device via the bottom portion of the vehicle body is adjusted, which in turn affects the produced downward pressure.

Optionally, the speed-sensitive suspension system includes a shock absorption element, a damping element, a rocker arm, a push rod, a wheel shaft, and wheels connected in sequence; and further includes an actuating element for actuating the shock absorption element; and a wheel speed sensor for sensing a real-time wheel speed. There is provided herein a specific implementation of the speed-sensitive suspension system, under such arrangement, the vertical height between the bottom portion of the vehicle body and the ground may be effectively adjusted according to the wheel speed.

Optionally, the aerodynamic device includes an air expansion channel for air to pass from the bottom of the vehicle; the air expansion channel comprises: a top wall defined by the bottom portion of the vehicle body, and a side wall defined by fin elements; wherein the fin elements are disposed at the bottom portion of the vehicle body and extend downward. A specific implementation of an aerodynamic device is also provided herein, under such arrangement, the air expansion channel has a configuration similar to a Venturi tube form which facilitates the expansion depressurization of the air flow therethrough, thereby creating a negative pressure and a downward pressure.

Optionally, the powered vehicle is a powered vehicle whose speed can reach a predetermined speed. This is because the higher the speed, the higher the possibility of the occurrence of the phenomenon of backflip when the powered vehicle encounters severe conditions, and the greater the dangerousness of the accident. At this point, the effect of pushing the powered vehicle against the ground by the downward pressure produced through the aforementioned arrangement is especially outstanding.

Optionally, the powered vehicle is a racing car. This is because the higher the speed, the higher the possibility of the occurrence of the phenomenon of backflip when the power vehicle encounters severe conditions, and the greater the dangerousness of the accident. And the racing car is a type of vehicle that is typically in high speed running state. At this point, the effect of pushing the powered vehicle against the ground by the downward pressure produced through the aforementioned arrangement is especially outstanding.

### Brief Description of Drawings

FIG. 1 is a side schematic view of an example of a racing car. However, according to the invention, the aerodynamic device (130) extends longitudinally past the bottom portion (110b) of the vehicle body (110) within a range of 40%-60% of the wheelspan, wherein the wheel span refers to the distance between the front wheel shaft and the rear wheel shaft, wherein the aerodynamic device (130) begins to extend backwardly from the bottom portion (110b) of the vehicle body (110) corresponding to a firewall (112a) of the powered vehicle. J
FIG. 2 is a partial side cross-sectional view of an embodiment of the racing car in FIG. 1.
FIG. 3 is a front schematic view of an embodiment of the racing car of FIG. 1.
FIG. 4 is a schematic view of one embodiment of a front suspension of a speed-sensitive suspension system of the racing car of the present invention.
FIG. 5 is a schematic view of one embodiment of a rear suspension of a speed-sensitive suspension system of the racing car of the present invention.
FIG. 6 is a schematic view of the motion state of the racing car of the present invention when the angle of attack is 3°.
FIG. 7 is a schematic view of the motion state of the racing car of the present invention when the angle of attack is 6°.

### Detailed Description

According to a concept of the present invention, there is provided a powered vehicle. In a non-limiting example as set forth below in connection with the figures, the powered vehicle is a racing car. It should be particularly noted, however, that while the following gives illustration of a racing car, other vehicles whose speed can reach a predetermined speed may also employ the technical solutions disclosed herein, here, the predetermined speed may be, for example, the running speed of a general racing car, or be lower than the speed of the racing car but aerodynamics related performance can also be improved through the technical solutions of the invention.

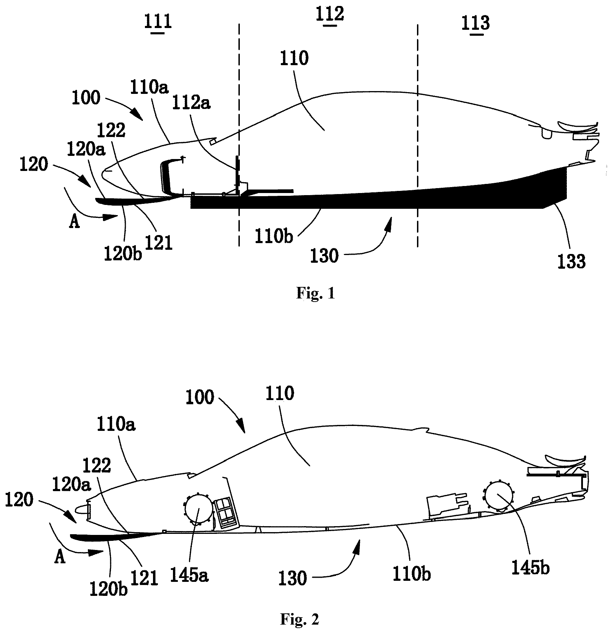

Embodiments of a racing car are provided herein in connection with the drawings. Referring to FIGS. 1 to 3, an embodiment of a racing car is shown. The racing car 100 includes a vehicle body 110 consisting of a head portion 111, a cockpit portion 112, and a rear portion 113. The three-portion depiction of the vehicle body 110 in the present concept is primarily divided by the driver cockpit portion 112. Specifically, the racing car body 110 in front of the cockpit portion 112 is defined as the head portion 111, while the racing car body 110 behind the cockpit portion 112 is defined as the rear portion 113.

On this basis, the racing car 100 also includes a front wing element 120 and an aerodynamic device 130 for improving aerodynamic performance. Wherein the front wing element 120 is disposed longitudinally at the head portion 111, it has a contour similar to an airfoil. Specifically, the front wing element 120 has an upper cambered surface 120a bending upward and a lower cambered surface 120b bending upward, such a configuration would cause a situation where the upper side air pressure is higher than the lower side air pressure when air flows through both sides so as to produce downward pressure. The aerodynamic device 130 is disposed longitudinally at the bottom portion 110b of the vehicle body and is configured to expand the air flowing therethrough and generate a negative pressure. In accordance with the foregoing configuration, upon movement of the racing car 100, the bottom fluid pressure flowing through the bottom portion 110b of the vehicle body from the lower cambered surface 120b of the front wing element 120 via the aerodynamic device 130 is lower than the roof fluid pressure flowing through the upper portion 110a of the vehicle body via the upper cambered surface 120a of the front wing element 120. Therefore, through cooperation of the front wing element 120 with the aerodynamic device 130, a negative pressure is created at the bottom portion 110b of the vehicle body, and the pressure centers of these downward pressure maintain a steady fore-and-aft distribution ratio over a certain range of trimming angles, so that convective air may push the racing car 100 to stay in contact with the ground, effectively avoiding the occurrence of the situation where the vehicle head goes off the ground or even makes a backflip over a wide range of trimming angles.

The previously proposed concept is mainly to achieve a corresponding technical effect by the use of a combination of the front wing element 120 and the aerodynamic device 130. In addition, to further optimize the aerodynamic performance of the racing car of the present concept, and to increase the downward pressure suitable for practical purposes and to avoid the occurrence of accidents due to the backflip of the racing car, several improvements or refinements will be made to the front wing element and the aerodynamic device on the basis of the foregoing embodiments, which will be described one by one in below.

For an aerodynamic device, see FIGS. 1 to 3, it may be disposed to extend longitudinally through a portion of the head portion 111, all of the cockpit portion 112, and a portion of the rear portion 113. Thereby, a specific implementation of the aerodynamic device 130 is provided, such arrangement well utilizes the space of the vehicle bottom portion to arrange the aerodynamic device 130, thereby ensuring that the effect of the expansion depressurization is achieved when air flows therethrough and eventually creating a negative pressure to produce the downward pressure.

More specifically, the aerodynamic device 130 may be made to extend longitudinally past the bottom portion 110b of the vehicle body within a range of 40%-60% of the wheelspan, and/or have a geometric gradient of 1°-5°. Wherein, the wheelspan refers to the distance between the front wheel shaft and the rear wheel shaft, and the geometric gradient refers to the included angle of the bottom portion of the vehicle body relative to the longitudinal reference line of the vehicle body. In this arrangement, on the angle of view from the front side towards the rear side of the vehicle body, the aerodynamic device forms a vehicle bottom channel in cooperation with the bottom portion of the vehicle body, the front side of the channel is disposed with the lowest point before the front shaft of the vehicle and extends towards the rear side of the vehicle body with progressively larger curvature, during this extension process the geometric gradient gradually increases between 1°-5°. The geometric gradient and length formed by this portion of the bottom portion 110b of the vehicle body can better achieve the effect of the expansion depressurization when the air flows through this section, and finally create a negative pressure to produce the downward pressure.

As a further optimization within the aforementioned design parameter ranges, the aerodynamic device 130 may be made to extend longitudinally past the bottom portion 110b of the vehicle body within a range of 55% of the wheelspan and/or have a geometric gradient of 3.5°. Such arrangement proposes further optimization on the basis of the aforementioned solution, and the experiment demonstrates that the bottom portion 110b of the vehicle body with such parameter design further facilitates the production of the negative pressure and the effect of the downward pressure.

Moreover, the aerodynamic device 130 may be made to begin to extend backward from the bottom portion 110b of the vehicle body corresponding to the firewall 112a of the racing car 100. A specific implementation of an aerodynamic device 130 is provided herein that takes into consideration the compatibility between other existing elements of the racing car 100 and the aerodynamic device 130 setting.

It should be appreciated that there are a variety of aerodynamic device forms that may be applied to the bottom portion of the racing car to provide expansion and decompression effect of the airflow. For ease of description, one specific implementation of the aerodynamic device 130 is presented herein that includes an air expansion channel 131 for air to pass from the bottom of the vehicle; the air expansion channel 131 comprises: a top wall 132 defined by the bottom portion 110b of the vehicle body, and a side wall 133 defined by fin elements; wherein the fin elements are disposed at the bottom portion 110b of the vehicle body and extend downward. Under this arrangement, the air expansion channel 131 has a configuration similar to a Venturi tube form which facilitates the expansion depressurization of the air flow therethrough, thereby creating a negative pressure and a downward pressure.

On the other hand, with respect to the front wing element, referring to FIGS. 1-3, it may be disposed in an adjustable structural form. For example, the front wing element 120 includes a front section 121 and a rear section 122 closely connected. Wherein, the rear section 122 is fixed on the head portion 111, and the front section 121 is rotatable relative to the rear section 122. In such arrangement, the front wing element 120 has certain adjustment space, and by rotating the front section 121 of the front wing element 120, the amount of air flow through the upper side and the lower side of the front wing element 120 may be changed, thereby adjusting the downward pressure produced. Through such adjustable design, even if the front end of the head portion is already in the air, the racing car may still return to the stable roadholding state through the aerodynamic setting of the vehicle body.

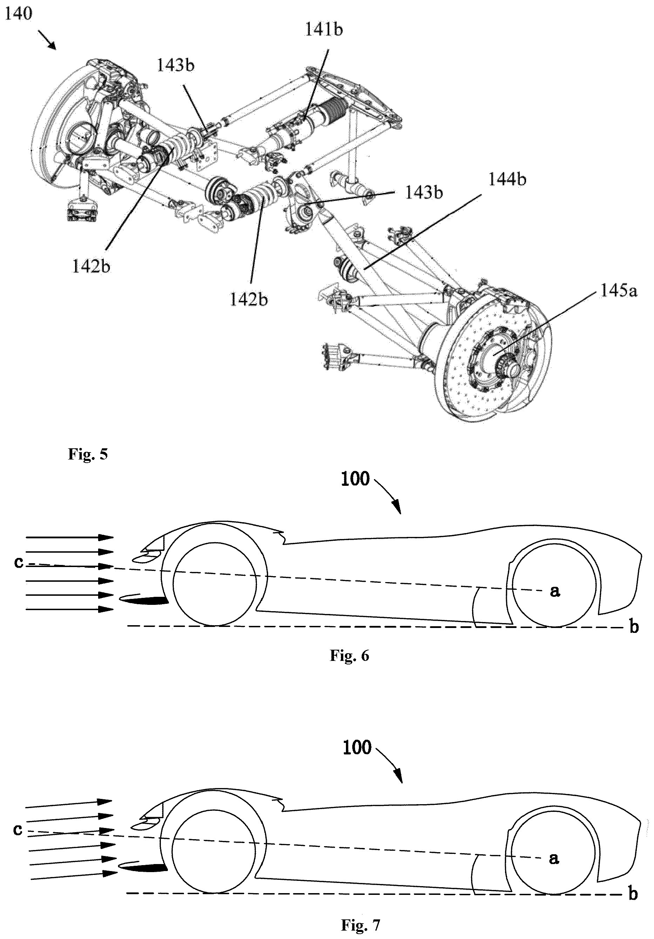

In accordance with the foregoing arrangement, in the case of a high angle of attack, the resultant force of the roof fluid pressure and the bottom fluid pressure experienced by the racing car 100 in the motion state is a downward pressure, i.e., the vehicle would still produce a tilting moment from the aerodynamic force to push the head downward and secure the vehicle in a forward direction. Specific details will be set forth in conjunction with FIGS. 6 and 7.

In FIG. 6, there is an angle of attack of 3° between the longitudinal reference line a of the vehicle body of the racing car 100 and the upstream air flow direction c, and there is a trimming angle of 3° between the longitudinal reference line a of the vehicle body and the ground plane defined by the contact point of the wheel. At this point, the upstream air flow of the vehicle body would produce enough downward pressure for the racing car 100, preventing it from going off the ground.

In FIG. 7, there is an angle of attack of 6° between the longitudinal reference line a of the vehicle body of the racing car 100 and the upstream air flow direction c, and there is a trimming angle of 3° between the longitudinal reference line a of the vehicle body and the ground plane defined by the contact point of the wheel. At this point, the upstream air flow of the vehicle body would still produce enough downward pressure for the racing car 100, preventing it from going off the ground.

Further, several auxiliary modifications may also be made to other structures of the racing car in order to further improve the negative pressure status of the bottom of the racing car and the experienced downward pressure effect, so that accidents are avoided. Some of the examples are selected to be described as follows.

For example, the racing car of the present concept may also include a speed-sensitive suspension system 140. Wherein, the speed-sensitive suspension system 140 adjusts the vertical height between the wheel shafts 145a, 145b and the vehicle body based on the real-time wheel speed when the racing car 100 is moving, and changes the vertical height between the bottom portion 110b of the vehicle body and the ground. The control correspondence between the shaft height and the speed may be obtained by looking up the corresponding parameter table. Under such arrangement, the vertical height between the bottom portion 110b of the vehicle body and the ground is adjusted by the speed-sensitive suspension system 140 so that the racing car 100 is closer to the ground, i.e., the amount of air flow through the aerodynamic device 130 via the bottom portion 110b of the vehicle body is adjusted, which in turn affects the produced downward pressure.

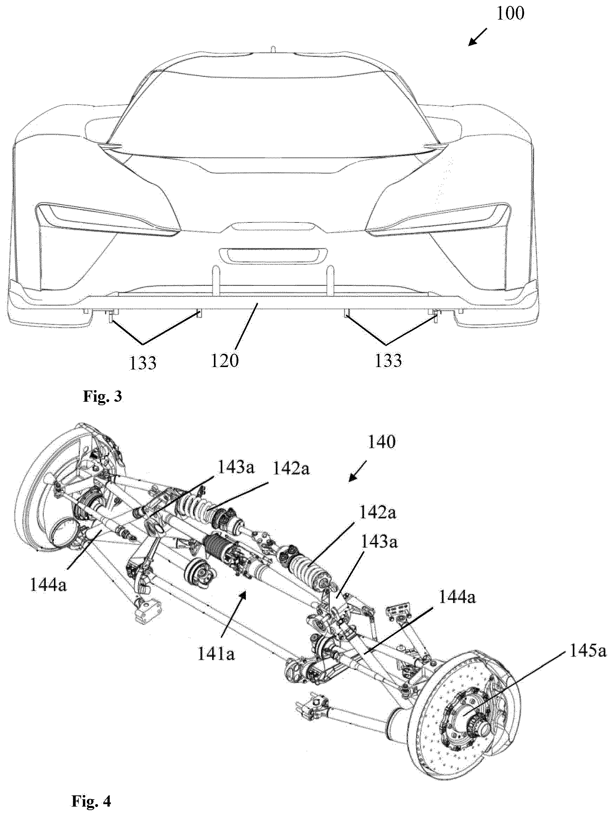

More specifically, referring to FIG. 4, one embodiment of a front suspension system in the speed-sensitive suspension system 140 includes a shock absorption element 141a, a damping element 142a, a rocker arm 143a, a push rod 144a, a wheel shaft 145a, and wheels connected in sequence; and further includes an actuating element for actuating the shock absorption element 141a; and a wheel speed sensor for sensing a real-time wheel speed. Under such arrangement, the vertical height between the front side of the bottom of the vehicle body and the ground may be effectively adjusted according to the wheel speed.

With continued reference to FIG. 5, one embodiment of a rear suspension system in the speed-sensitive suspension system 140 includes a shock absorption element 141b, a damping element 142b, a rocker arm 143b, a push rod 144b, a wheel shaft 145b, and wheels connected in sequence; and further includes an actuating element for actuating the shock absorption element 141b; and a wheel speed sensor for sensing a real-time wheel speed. Under such arrangement, the vertical height between the rear side of the bottom of the vehicle body and the ground may be effectively adjusted according to the wheel speed.

The above examples mainly illustrate racing cars. While only some of the embodiments of the present invention have been described, it will be appreciated by those of ordinary skill in the art that the present invention may be implemented in many other forms or may encompass various modifications and alterations, as long as they do not depart from the scope of the invention as defined by the appended claims.

## Claims

1. A powered vehicle, comprising:
a vehicle body (110) including a head portion (111), a cockpit portion (112), and a rear portion (113);
a front wing element (120) disposed laterally along the vehicle body (110) at the head portion (111), the front wing element (120) having an upper cambered surface (120a) bending upward and a lower cambered surface (120b) bending upward; and
an aerodynamic device (130) disposed longitudinally along the vehicle body (110) at the bottom portion (110b) of the vehicle and is configured to expand air flowing therethrough and produce negative pressure;
wherein, upon movement of the powered vehicle, a bottom fluid pressure flowing from the lower cambered surface (120b) of the front wing element (120) through the bottom portion (110b) of the vehicle body (110) via the aerodynamic device (130) is lower than a roof fluid pressure flowing through an upper portion (110a) of the vehicle body (110) via the upper cambered surface (120a) of the front wing element (120), wherein the aerodynamic device (130) extends longitudinally past the bottom portion (110b) of the vehicle body (110) within a range of 40%-60% of the wheelspan, wherein the wheelspan refers to the distance between the front wheel shaft and the rear wheel shaft, wherein the aerodynamic device (130) begins to extend backwardly from the bottom portion (110b) of the vehicle body (110) corresponding to a firewall (112a) of the powered vehicle.

2. The powered vehicle of claim 1, **characterized in that**, the aerodynamic device (130) extends longitudinally through a portion of the head portion (111), all of the cockpit portion (112), and a portion of the rear portion (113).

3. The powered vehicle of claim 1, **characterized in that**, the aerodynamic device (130) extends longitudinally past the bottom portion (110b) of the vehicle body (110) within a range of 55% of the wheel span.

4. The powered vehicle of any of claims 1 to 3, **characterized in that**: the front wing element (120) includes a front section (121) and a rear section (122) closely connected, the rear section (122) being fixed on the head portion (111), and the front section (121) being capable of adjusting a tilt angle relative to the rear section (122).

5. The powered vehicle of any of claims 1 to 3, **characterized in that**, it further comprises: a speed-sensitive suspension system (140) adjusting a vertical height between the wheel shaft (145a, 145b) and the vehicle body (110) based on the real-time wheel speed in the movement of the powered vehicle, and changes the vertical height between the bottom portion (1 10b) of the vehicle body (110) and the ground.

6. The powered vehicle of claim 5, **characterized in that**, the speed-sensitive suspension system (140) includes a shock absorption element (141a, 141b), a damping element (142a, 142b), a rocker arm (143a, 143b), a push rod (144a, 144b), a wheel shaft (145a, 145b), and wheels connected in sequence; and further includes an actuating element for actuating the shock absorption element (141a, 141b); and a wheel speed sensor for sensing the real-time wheel speed.

7. The powered vehicle of any of claims 1 to 3, **characterized in that**, the aerodynamic device (130) includes an air expansion channel (131) for air to pass from the bottom of the vehicle; the air expansion channel (131) comprises: a top wall (132) defined by the bottom portion (110b) of the vehicle body (110), and a side wall (133) defined by fin elements; wherein the fin elements are disposed at the bottom portion (110b) of the vehicle body (110) and extend downward.

8. The powered vehicle of any of claims 1 to 7, **characterized in that**, the powered vehicle is a powered vehicle whose speed can reach a predetermined speed.

9. The powered vehicle of any of claims 1 to 7, **characterized in that**, the powered vehicle is a racing car (100).

## Patentansprüche

1. Angetriebenes Fahrzeug, aufweisend:
einen Fahrzeugaufbau (110), der einen Kopfteil (111), einen Cockpitteil (112) und einen Heckteil (113) aufweist;
ein Vorderflügelelement (120), das lateral entlang des Fahrzeugaufbaus (110) am Kopfteil (111) angeordnet ist, wobei das Vorderflügelelement (120) eine obere gekrümmte Fläche (120a), die nach oben gebogen ist, und eine untere gekrümmte Fläche (120b), die nach oben gebogen ist, aufweist; und
eine aerodynamische Vorrichtung (130), die in Längsrichtung entlang des Fahrzeugaufbaus (110) am Bodenteil (110b) des Fahrzeugs angeordnet ist und dazu eingerichtet ist, dort hindurch strömende Luft zu expandieren und einen Unterdruck zu erzeugen;
wobei bei Bewegung des angetriebenen Fahrzeugs ein Bodenfluiddruck, der von der unteren gekrümmten Fläche (120b) des Vorderflügelelements (120) über die aerodynamische Vorrichtung (130) durch den Bodenteil (110b) des Fahrzeugaufbaus (110) strömt, niedriger als ein Dachfluiddruck, der über die obere gekrümmte Fläche (120a) des Vorderflügelelements (120) durch einen Oberteil (110a) des Fahrzeugaufbaus (110) strömt, ist, wobei sich die aerodynamische Vorrichtung (130) in Längsrichtung innerhalb eines Bereichs von 40%-60% der Radspannweite am Bodenteil (110b) des Fahrzeugaufbaus (110) vorbei erstreckt, wobei sich die Radspannweite auf den Abstand zwischen der Vorderradwelle und der Hinterradwelle bezieht, wobei die aerodynamische Vorrichtung (130) beginnt sich von dem Bodenteil (110b) des Fahrzeugaufbaus (110) nach hinten zu erstrecken, entsprechend einem Brandschott (112a) des angetriebenen Fahrzeugs.

2. Angetriebenes Fahrzeug nach Anspruch 1, **dadurch gekennzeichnet, dass** sich die aerodynamische Vorrichtung (130) in Längsrichtung durch einen Teil des Kopfteils (111), den gesamten Cockpitteil (112) und einen Teil des Heckteils (113) erstreckt.

3. Angetriebenes Fahrzeug nach Anspruch 1, **dadurch gekennzeichnet, dass** sich die aerodynamische Vorrichtung (130) in Längsrichtung an dem Bodenteil (110b) des Fahrzeugaufbaus (110) vorbei erstreckt innerhalb eines Bereichs von 55% der Radspannweite.

4. Angetriebenes Fahrzeug nach einem der Ansprüche 1 bis 3, **dadurch gekennzeichnet, dass** das Vorderflügelelement (120) einen vorderen Abschnitt (121) und einen hinteren Abschnitt (122), die eng verbunden sind, aufweist, wobei der hintere Abschnitt (122) an dem Kopfteil (111) fixiert ist und wobei der vordere Abschnitt (121) in der Lage ist, einen Kippwinkel bezüglich des hinteren Abschnitts (122) einzustellen.

5. Angetriebenes Fahrzeug nach einem der Ansprüche 1 bis 3, **dadurch gekennzeichnet, dass** es zusätzlich aufweist: ein geschwindigkeitsabhängiges Aufhängungssystem (140), das eine vertikale Höhe zwischen der Radwelle (145a, 145b) und dem Fahrzeugaufbau (110) basierend auf der Echtzeitdrehzahl bei der Bewegung des angetriebenen Fahrzeugs einstellt und die vertikale Höhe zwischen dem Bodenteil (110b) des Fahrzeugaufbaus (110) und dem Erdboden ändert.

6. Angetriebenes Fahrzeug nach Anspruch 5, **dadurch gekennzeichnet, dass** das geschwindigkeitsabhängige Aufhängungssystem (140) ein Stoßabsorptionselement (141a, 141b), ein Dämpfungselement (142a, 142b), eine Schwinge (143a, 143b), eine Druckstange (144a, 144b), eine Radwelle (145a, 145b) und Räder, die nacheinander verbunden sind, aufweist und zusätzlich ein Betätigungselement zum Betätigen des Stoßabsorptionselements (141a, 141b) und einen Raddrehzahlsensor zum Erfassen der Echtzeitraddrehzahl aufweist.

7. Angetriebenes Fahrzeug nach einem der Ansprüche 1 bis 3, **dadurch gekennzeichnet, dass** die aerodynamische Vorrichtung (130) einen Luftexpansionskanal (131) zum Passieren von Luft vom Boden des Fahrzeugs aufweist; wobei der Luftexpansionskanal (131) aufweist: eine obere Wand (132), die von dem Bodenteil (110b) des Fahrzeugaufbaus (110) definiert wird, und eine Seitenwand (133), die von Rippenelementen definiert wird; wobei die Rippenelemente am Bodenteil (110b) des Fahrzeugaufbaus (110) angeordnet sind und sich nach unten erstrecken.

8. Angetriebenes Fahrzeug nach einem der Ansprüche 1 bis 7, **dadurch gekennzeichnet, dass** das angetriebene Fahrzeug ein angetriebenes Fahrzeug ist, dessen Geschwindigkeit eine vorbestimmte Geschwindigkeit erreichen kann.

9. Angetriebenes Fahrzeug nach einem der Ansprüche 1 bis 7, **dadurch gekennzeichnet, dass** das angetriebene Fahrzeug ein Rennwagen (100) ist.

## Revendications

1. Véhicule motorisé, comprenant :
une carrosserie de véhicule (110) incluant une partie tête (111), une partie habitacle (112), et une partie arrière (113) ;
un élément aile avant (120) disposé latéralement le long de la carrosserie de véhicule (110) au niveau de la partie tête (111), l'élément aile avant (120) ayant une surface cambrée supérieure (120a) s'incurvant vers le haut et une surface cambrée inférieure (120b) s'incurvant vers le haut ; et
un dispositif aérodynamique (130) disposé longitudinalement le long de la carrosserie de véhicule (110) au niveau de la partie basse (110b) du véhicule et est configuré pour entraîner la dilatation de l'air s'écoulant à travers celui-ci et produire une pression négative ;
dans lequel, lors du mouvement du véhicule motorisé, une pression fluidique du bas s'écoulant depuis la surface cambrée inférieure (120b) de l'élément aile avant (120) à travers la partie basse (110b) de la carrosserie de véhicule (110) par l'intermédiaire du dispositif aérodynamique (130) est inférieure à une pression fluidique du toit s'écoulant à travers une partie supérieure (110a) de la carrosserie de véhicule (110) par l'intermédiaire de la surface cambrée supérieure (120a) de l'élément aile avant (120), dans lequel le dispositif aérodynamique (130) s'étend longitudinalement au-delà de la partie basse (110b) de la carrosserie de véhicule (110) au sein d'une plage de 40 % à 60 % de l'envergure de roues, dans lequel l'envergure de roues fait référence à la distance entre l'arbre de roue avant et l'arbre de roue arrière, dans lequel le dispositif aérodynamique (130) commence à s'étendre vers l'arrière à partir de la partie basse (110b) de la carrosserie de véhicule (110) correspondant à un coupe-feu (112a) du véhicule motorisé.

2. Véhicule motorisé selon la revendication 1, **caractérisé en ce que** le dispositif aérodynamique (130) s'étend longitudinalement à travers une partie de la partie tête (111), la totalité de la partie habitacle (112), et une partie de la partie arrière (113).

3. Véhicule motorisé selon la revendication 1, **caractérisé en ce que** le dispositif aérodynamique (130) s'étend longitudinalement au-delà de la partie basse (110b) de la carrosserie de véhicule (110) au sein d'une plage de 55 % de l'envergure de roues.

4. Véhicule motorisé selon l'une quelconque des revendications 1 à 3, **caractérisé en ce que** : l'élément aile avant (120) inclut une section avant (121) et une section arrière (122) reliées de façon étroite, la section arrière (122) étant fixée sur la partie tête (111), et la section avant (121) étant capable d'ajuster un angle d'inclinaison relativement à la section arrière (122).

5. Véhicule motorisé selon l'une quelconque des revendications 1 à 3, **caractérisé en ce qu'**il comprend en outre : un système de suspension sensible à la vitesse (140) ajustant une hauteur verticale entre l'arbre de roue (145a, 145b) et la carrosserie de véhicule (110) sur la base de la vitesse de roue en temps réel dans le mouvement du véhicule motorisé, et change la hauteur verticale entre la partie basse (110b) de la carrosserie de véhicule (110) et le sol.

6. Véhicule motorisé selon la revendication 5, **caractérisé en ce que** le système de suspension sensible à la vitesse (140) inclut un élément d'absorption de chocs (141a, 141b), un élément amortisseur (142a, 142b), un bras oscillant (143a, 143b), une tige de poussée (144a, 144b), un arbre de roue (145a, 145b), et des roues, reliés en séquence ; et inclut en outre un élément actionneur pour actionner l'élément d'absorption de chocs (141a, 141b) ; et un capteur de vitesse de roue pour détecter la vitesse de roue en temps réel.

7. Véhicule motorisé selon l'une quelconque des revendications 1 à 3, **caractérisé en ce que** le dispositif aérodynamique (130) inclut un canal de dilatation d'air (131) pour que de l'air passe à partir du bas du véhicule ; le canal de dilatation d'air (131) comprend : une paroi haute (132) définie par la partie basse (110b) de la carrosserie de véhicule (110), et une paroi latérale (133) définie par des éléments ailettes ; dans lequel les éléments ailettes sont disposés dans la partie basse (110b) de la carrosserie de véhicule (110) et s'étendent vers le bas.

8. Véhicule motorisé selon l'une quelconque des revendications 1 à 7, **caractérisé en ce que** le véhicule motorisé est un véhicule motorisé dont la vitesse peut atteindre une vitesse prédéterminée.

9. Véhicule motorisé selon l'une quelconque des revendications 1 à 7, **caractérisé en ce que** le véhicule motorisé est une voiture de course (100).
